# FASCICULE DE BREVET EUROPEEN

(11) **EP 2 456 548 B1**
(45) Date de publication et mention de la délivrance du brevet: **01.01.2014**
(21) Numéro de dépôt: 10752047.0
(22) Date de dépôt: 20.07.2010
(51) Int. Cl.: B01J 2/02, B01J 2/06, B01J 19/24, B01J 19/26, C01B 13/18

(54) **SYNTHÈSE DE PARTICULES PAR THERMOHYDROLYSE DE PRÉCURSEURS MINÉRAUX**
PARTIKELSYNTHESE DURCH DIE THERMISCHE HYDROLYSE VON MINERALISCHEN VORLÄUFERN
PARTICLE SYNTHESIS BY MEANS OF THE THERMAL HYDROLYSIS OF MINERAL PRECURSORS

(30) Priorité: 20.07.2009 FR 0955023
(43) Date de publication de la demande: 30.05.2012
(73) Titulaire: Centre National de la Recherche Scientifique CNRS, 75016 Paris (FR); Université de Bourgogne, 21000 Dijon (FR)
(72) Inventeur: AYMES, Daniel, 21470 Brazey-en-Plaine (FR); ARIANE, Moustapha, 21800 Quetigny (FR); BERNARD, Frédéric, 21800 Neuilly-les-Dijon (FR); MUHR, Hervé, 54250 Champigneulles (FR); DEMOISSON, Frédéric, 21000 Dijon (FR)
(74) Mandataire: Blot, Philippe Robert Emile
(86) Numéro de dépôt international: PCT/FR2010/051520
(87) Numéro de publication internationale: WO 2011/010056

(56) Documents cités:
- FR-A- 837 410
- JP-A- 5 310 425
- LESTER E ET AL: "Reaction engineering: The supercritical water hydrothermal synthesis of nano-particles", JOURNAL OF SUPERCRITICAL FLUIDS, PRA PRESS, US LNKD- DOI:10.1016/J.SUPFLU.2005.08.011, vol. 37, no. 2, 1 avril 2006 (2006-04-01), pages 209-214, XP024910169, ISSN: 0896-8446 [extrait le 2006-04-01] cité dans la demande
- AIMABLE A ET AL: "Continuous hydrothermal synthesis of inorganic nanopowders in supercritical water: Towards a better control of the process", POWDER TECHNOLOGY, ELSEVIER SEQUOIA, LAUSANNE, CH LNKD- DOI:10.1016/J.POWTEC.2008.04.064, vol. 190, no. 1-2, 5 mars 2009 (2009-03-05), pages 99-106, XP025952413, ISSN: 0032-5910 [extrait le 2008-05-02]

## Description

La présente invention a trait au domaine de la synthèse de particules, et plus précisément à celui de la synthèse de particules ayant des dimensions contrôlées, en particulier des dimensions nanométriques (par exemple inférieures à 500 nm, et notamment inférieures à 100 nm), notamment inférieures à 50 nm, voire à 20 nm).

Plus précisément, l'invention concerne un procédé de préparation de particules minérales en continu, du type mettant en oeuvre une thermolyse de précurseurs minéraux en milieu aqueux, qui peut notamment être employé pour une production industrielle.

Le terme *"précurseur minéral",* au sens où il est employé dans la présente description, désigne une espèce chimique, généralement minérale ou organométallique, de préférence soluble ou dispersable en milieu aqueux, qui, lorsqu'elle est soumise à un traitement thermique en milieu aqueux, est convertie en une autre espèce chimique, de nature minérale, qui est capable de former des particules solides minérales, par nucléation et croissance, au sein du milieu aqueux.

On connaît de nombreux précurseurs de ce type, qui conduisent le plus souvent, par thermolyse en milieu aqueux, à des particules à base d'oxydes métallique, d'oxyhydroxydes métalliques et/ou de métaux. Des exemples de tels précurseurs minéraux sont certains sels métalliques hydrosolubles de métaux de transition ou de lanthanides (par exemple, de façon non limitative, des nitrates ou sulfates, tels que ZrO(NO₃)₂, Zn(NO₃)₂ ou Fe₂SO₄, qui sont respectivement convertis par thermolyse en milieu aqueux en particules à base d'oxydes de zirconium, de zinc ou de fer). Outre ces sels métalliques, il a été décrit divers autres précurseurs, notamment des composés organométalliques, comme par exemple le bis(ammoniolacto)dihydroxytitane (CH₃CH(O)COONH₄)₂Ti(OH)₂ qui est converti en particules à base d'oxyde de titane par thermolyse en milieu aqueux.

Dans certains cas, les précurseurs employés peuvent être des espèces formées *in situ,* juste avant leur conversion en particules, comme par exemple des hydroxydes de métaux de transition ou de lanthanides (notamment des hydroxydes de fer ou de zinc, obtenus par réaction *in situ* d'un sel métallique correspondant (nitrate ou sulfate par exemple) et d'une base de Bronsted (typiquement NaOH, KOH ou NH₄OH)

Pour les précurseurs minéraux du type précité, on peut définir une température limite, qui sera désignée ci-après par *"température de conversion",* au-delà de laquelle les précurseurs minéraux sont convertis en particules minérales. La température de conversion d'un précurseur donné varie généralement avec la pression.

Avantageusement, la conversion des précurseurs minéraux en particules minérales a lieu dans l'eau à l'état supercritique, à savoir à une température supérieure à 374°C et à une pression supérieure à 221 bar (22,1.10⁶ Pa), ce qui permet, entre autres avantages, de diminuer le temps de réaction.

Il a été décrit différents procédés de préparation de particules par thermolyse en milieu aqueux de précurseurs minéraux du type précité, qui présentent souvent l'inconvénient de ne pas conduire à des particules ayant des tailles, compositions et morphologies homogènes.

Dans ce cadre, il est notamment connu de longues dates des procédés conduits par lots (à savoir dans des réacteurs de type "batch"). Dans ces procédés, le plus souvent, les réactifs commencent généralement à réagir dès le temps de mise en pression et en température du réacteur, ce qui conduit à une réaction conduite de façon non homogène et donc à des disparités dans la composition, la taille et/ou la morphologie des particules synthétisées.

Plus récemment, il a été développé des procédés de mise en oeuvre en continu, dans lequel un flux liquide comprenant les précurseurs minéraux est injecté dans une chambre portée à une température supérieure à la température de conversion des précurseurs. A ce sujet, on pourra typiquement se reporter à l'article de Arai et al dans J. Am Ceram. Soc., vol. 75(4) pp 1019-1022 (1992) qui décrit une synthèse de ce type permettant la préparation de particules à base d'oxydes métalliques. La solution proposée par ces procédés conduits de façon continue évite certes une réaction prématurée des réactifs, mais elle ne s'avère généralement pas suffisante pour obtenir des conditions de synthèse parfaitement homogène autorisant la synthèse de particules de composition, taille et morphologie homogènes. Entre autres difficultés, les particules obtenues tendent à s'agglomérer.

En variante, il a été proposé par Martyn Polyakoff et al. dans le Journal of Supercritical Fluids, vol 37, pp 209-214 (2006), une synthèse de particules où la thermolyse des précurseurs est effectuée en mettant en contact au sein d'un réacteur tubulaire : (i) un premier flux comprenant des précurseurs minéraux ; et (ii) à contre courant, un deuxième flux comprenant de l'eau à une température supérieure à la température de conversion des précurseurs. Dans ce type de procédé, l'injection du flux d'eau élève la température du milieu véhiculé dans le réacteur tubulaire, et, en aval du point d'injection, les particules se forment par conversion progressive des précurseurs. Là encore, les conditions de la synthèse ne sont pas généralement suffisamment homogènes pour permettre la formation de particules de composition, taille et morphologie homogènes. En particulier, il existe toute une zone en aval du point d'injection où la température et la composition du mélange réactionnel sont difficiles à maîtriser.

Un but de la présente invention est de fournir un procédé de synthèse de particules minérales à partir de précurseurs minéraux en milieu aqueux qui soit amélioré par rapport aux procédés précités, et qui permette, avec un coût raisonnable, de synthétiser des particules de composition, taille et morphologie homogènes et contrôlées. Dans ce cadre, l'invention se fixe en particulier pour objectif de fournir un procédé permettant la synthèse de particules de taille, composition et morphologie homogènes contrôlées ayant de préférence des tailles inférieures à 500 nm, et plus particulièrement inférieures à 100 nm.

A cet effet, la présente invention propose de mettre en oeuvre la technique du contre courant du type divulgué dans l'article précité du Journal of Supercritical Fluids, vol 37, pp 209-214 (2006), mais en réalisant plus spécifiquement la mise en contact des flux à contre courant au sein d'une chambre de mélange permettant d'obtenir en un temps réduit des conditions homogènes de synthèse des particules.

Plus précisément, selon un premier aspect, la présente invention a pour objet un procédé de préparation en continu de particules minérales par thermolyse de précurseurs minéraux en milieu aqueux, dans lequel on met en contact :
- un premier flux, dit ci-après flux réactif, comprenant les précurseurs minéraux à une température inférieure à leur température de conversion
- à contre courant de ce premier flux, un deuxième flux, dit ci-après flux caloporteur, comprenant de l'eau à une température suffisante pour porter les précurseurs à une température supérieure à leur température de conversion,
le flux de mélange résultant du mélange de ces deux flux étant ensuite véhiculé au sein d'un réacteur tubulaire (en aval de la chambre de mélange), où des particules se forment par conversion progressive des précurseurs,
et où la mise en contact du flux réactif et du flux caloporteur est réalisée au sein d'une chambre de mélange, le flux réactif étant injecté par au moins un premier conduit d'alimentation dans ladite chambre et le flux caloporteur étant injecté dans ladite chambre, à contre-courant du premier flux, par un deuxième conduit d'alimentation, et ladite chambre de mélange ayant une section maximale supérieure à la section de sortie de chacun desdits conduits d'alimentation de ladite chambre.

Selon un deuxième aspect, la présente invention a également pour objet un dispositif pour la mise en oeuvre du procédé précité, qui comprend :
un réacteur tubulaire propre à réaliser la synthèse de particules par thermolyse de précurseurs minéraux en milieu aqueux ; et
en contact fluide avec ledit réacteur tubulaire, une chambre de mélange dans laquelle débouchent :
   - au moins un premier conduit d'alimentation de la chambre capable de véhiculer un flux comprenant des précurseurs minéraux ;
   - un deuxième conduit d'alimentation de la chambre permettant de véhiculer un flux à contre-courant du flux véhiculé par le premier conduit, et propre à véhiculer un fluide caloporteur,
où la chambre de mélange a une section maximale supérieure à la section de sortie de chacun desdits conduits d'alimentation.

Les travaux qui ont été réalisés par les inventeurs dans le cadre de la présente invention ont maintenant permis d'établir qu'en mettant en oeuvre une chambre de mélange telle que définie ci-dessus, on obtient, au sein de cette chambre de mélange, une mise en température et une homogénéisation du milieu réactionnel en un temps très bref, ce qui permet, contrairement aux procédés de l'état de la technique, de faire passer de façon extrêmement rapide les précurseurs minéraux de conditions de températures et pression où ils sont stables, ou sensiblement stables, (en amont de la chambre de réaction où ils sont à une température inférieure à leur température de conversion) à des conditions de synthèse stationnaires homogènes et définies (en sortie de la chambre de mélange où le milieu a une composition et une température homogènes).

Dès lors, les conditions de synthèse particulières du procédé de l'invention permettent un contrôle extrêmement fin de la croissance des particules qui n'était pas envisageable avec les procédés précités.

En outre, la mise en oeuvre spécifique de la chambre de mélange inhibe l'apparition prématurée de tout germe susceptible de conduire à la formation de particules avant le processus de synthèse souhaité.

Pour optimiser encore l'effet de mélange mis en oeuvre dans la présente invention, selon un mode de réalisation préférentiel de l'invention, la chambre de mélange peut avantageusement être alimentée par au moins deux conduits d'alimentation autres que le conduit d'alimentation par lequel le flux caloporteur est injecté à contre-courant, dont un au moins véhicule le flux réactif. Selon ce mode de réalisation, la chambre de mélange se retrouve alimentée par au moins trois conduits d'alimentation, ce qui accentue encore les effets de mélange au sein de cette chambre et permet encore de réduire le temps d'obtention d'un milieu de synthèse de particules homogène. De préférence la chambre de mélange est alimentée par au plus cinq conduits d'alimentation autres que le conduit d'alimentation par lequel le flux caloporteur est injecté à contre-courant. En effet, au delà, un mélange effectif devient difficile au sein de la chambre de mélange. De préférence, la chambre de mélange mise en oeuvre dans le procédé de l'invention est alimentée par 2, 3 ou 4 conduits d'alimentation autres que le conduit d'alimentation par lequel le flux caloporteur est injecté à contre-courant, dont un au moins véhicule le flux réactif.

Le mode de réalisation de l'invention où la chambre de mélange est alimentée par au moins trois conduits d'alimentation est notamment adapté dans le cas où les précurseurs minéraux employés pour la synthèse des particules peuvent être obtenus par réaction de plusieurs réactifs (par exemple des précurseurs de type hydroxydes métalliques qui peuvent être obtenus par réaction d'un sel métallique et d'une base de Brønsted).

Dans ce cas de figure, selon une variante intéressante de l'invention, la chambre peut avantageusement être alimentée par au moins deux conduit d'alimentation véhiculant chacun un des réactifs, à l'exception des autres réactifs. Selon cette variante spécifique, le précurseur est formé *in situ* au sein de la chambre de mélange et le "flux réactif" au sens de la présente description s'entend alors de l'ensemble des flux de réactifs conduisant à la formation du précurseur au sein de la chambre de mélange.

Selon cette variante de l'invention, la chambre peut par exemple être alimentée par :
- un premier conduit d'alimentation véhiculant une solution aqueuse d'un sel d'un métal de transition ou d'un lanthanide (telle qu'une solution d'un nitrate ou d'un sulfate hydrosoluble, par exemple ZrO(NO₃)₂, Zn(NO₃)₂ ou Fe₂SO₄) ;
- un deuxième conduit d'alimentation véhiculant une solution d'une base de Brønsted (telle que NaOH, KOH ou NH₄OH) ; et
- un troisième conduit d'alimentation véhiculant le fluide caloporteur.

Selon un mode de réalisation compatible avec les modes décrits précédemment, la chambre de mélange comporte, en plus des conduits d'alimentation véhiculant le flux réactif et le flux caloporteur, au moins un conduit d'alimentation additionnel par lequel est injecté de l'eau, cette injection d'eau étant de préférence effectuée à co-courant du flux réactif. Dans ce cas de figure, la chambre est alimentée par un ou plusieurs conduits d'alimentation véhiculant le flux réactif, un ou plusieurs conduits d'alimentation véhiculant de l'eau, et un conduit d'alimentation le fluide caloporteur. Ainsi, là encore, la chambre de mélange est alimentée par au moins trois conduits d'alimentation, ce qui optimise le mélange au sein de cette chambre et permet d'obtenir une homogénéisation de la température et de la composition du milieu réactionnel au sein de la chambre en une durée très réduite.

Avantageusement, dans tous les modes de réalisation de l'invention où la chambre de mélange est alimentée par trois conduits d'alimentation ou plus, l'ensemble des flux véhiculés par les différents conduits d'alimentation alimentant la chambre de mélange sont à co-courant, à l'exception du flux caloporteur qui est à contre-courant de tous les autres flux introduits dans la chambre, ce qui optimise encore le mélange.

Par ailleurs, quel que soit le mode de mise en oeuvre exact du procédé de l'invention, il est préférable que la géométrie et la taille de la chambre de mélange soient optimisées pour permettre un mélange le plus rapide et le plus efficace possible des flux réactif et caloporteur au sein de ladite chambre.

A cet effet, il est en particulier préférable que la totalité de la surface interne de la chambre de mélange employée dans le cadre de la présente invention soit concave, c'est-à-dire que tout segment défini par deux points de la surface interne de la chambre de mélange ne coupe pas la surface de la chambre de mélange. Plus préférentiellement encore, il est souhaitable, autant que faire se peut, que la surface interne de la chambre de mélange ne présente pas de partie anguleuse ou d'aspérité. Une telle géométrie de la surface interne de la chambre de mélange inhibe la formation des zones de rétention, ce qui permet (i) de limiter le temps de séjour des réactifs dans la chambre de mélange, évitant ainsi une croissance prématurée de particules dans la chambre de mélange ; et (ii) d'inhiber des phénomènes de piégeage d'une partie du flux au sein de la chambre, ce qui permet d'obtenir une composition homogène en sortie de la chambre, et donc, *in fine,* des particules de composition, morphologie et taille homogènes et contrôlables.

Ainsi, selon un mode de réalisation particulièrement intéressant, la surface interne de la chambre de mélange a la forme d'une portion de sphère, par exemple un hémisphère. Alternativement, la surface interne de la chambre de mélange peut présenter une forme paraboloïde, hémi-ellipsoïde, ou ovoïde.

Par ailleurs, il est préférable que le conduit d'alimentation véhiculant le flux caloporteur à contre-courant soit un tube cylindrique qui présente, au niveau de sa sortie, un diamètre interne qui va en s'élargissant de l'intérieur vers l'extérieur du tube, ce qui là encore optimise le mélange dans la chambre, en évitant toute zone de rétention dans la chambre. De préférence, l'extrémité du conduit d'alimentation véhiculant le flux caloporteur présente une géométrie dite de "bec en cône", du type obtenu en usinant l'extrémité du tube à l'aide d'une tête de fraisage ayant la forme d'un cône de révolution dont l'angle entre l'axe et la génératrice est avantageusement compris entre 10 ° et 80 °, de préférence entre 30 ° et 60 °.

Selon un mode de réalisation préférentiel de l'invention, l'espace interne du réacteur tubulaire employé pour la préparation des particules a la forme d'un cylindre dont une des extrémités est obturée par un capuchon (venu de matière avec le cylindre ou, plus souvent, fixé sur celui-ci), et où :
- le conduit (ou les conduits) d'alimentation véhiculant le flux réactif débouche(nt) dans le capuchon ; et
- le conduit d'alimentation véhiculant le flux caloporteur est localisé au sein du réacteur tubulaire cylindrique (il s'entend généralement axialement le long du cylindre) et débouche au niveau de la zone extrémale du réacteur dotée du capuchon.

Selon ce mode de réalisation, la chambre de mélange des flux réactif et caloporteur est constituée par la zone extrémale du réacteur tubulaire dotée du capuchon.

Le flux de mélange résultant du mélange obtenu dans cette chambre est ensuite véhiculé dans le réacteur vers l'autre extrémité.

Selon ce mode de réalisation, pour les raisons évoquées plus haut dans la présente description, la surface interne de l'ensemble du réacteur cylindrique doté de son capuchon est de préférence entièrement concave, avantageusement sans partie anguleuse ni aspérité. En particulier, il est souhaitable selon l'invention que la connexion entre le capuchon et le réacteur cylindrique se fasse sans décrochement.

Avantageusement, selon ce mode de réalisation, le capuchon a la forme d'un hémisphère, et le conduit d'alimentation véhiculant le flux caloporteur qui est localisé au sein du cylindre débouche dans l'espace interne du réacteur cylindrique (à savoir en deçà du cercle définissant la zone de contact entre le réacteur tubulaire cylindrique et le capuchon) et non dans le capuchon, de préférence sensiblement au niveau de l'axe commun du réacteur tubulaire cylindrique et du capuchon hémisphérique. Dans ce cas, il est préférable que le rapport de la distance entre l'extrémité du conduit d'alimentation véhiculant le flux caloporteur qui débouche dans le réacteur cylindrique et le fond du capuchon, rapportée au diamètre interne du réacteur cylindrique, soit comprise entre 0,5 et 1,5, de préférence entre 0,8 et 1,2.

Par ailleurs, selon ce mode de réalisation, il est préférable que le rapport du diamètre externe du conduit d'alimentation véhiculant le flux caloporteur rapporté au diamètre interne du réacteur tubulaire cylindrique soit supérieur à 0,5, ce rapport étant typiquement compris entre 0,5 et 0,8.

D'autre part, selon ce mode de réalisation, il est préférable qu'au moins deux conduits d'alimentation (typiquement deux, trois ou quatre et de préférence deux ou trois) débouchent dans le capuchon définissant la chambre de mélange, dont un au moins véhicule le flux réactif. Dans ce cas, la distance entre les sorties des conduits d'alimentation qui débouchent dans le capuchon et l'angle que font chacun de ces conduits d'alimentation avec l'axe du réacteur tubulaire cylindrique peuvent avantageusement être adaptés de façon à optimiser le mélange des flux réalisés dans la chambre. Dans ce cadre, en règle générale, il se révèle avantageux que le rapport de la distance entre les sorties des conduits d'alimentation qui débouchent dans le capuchon rapportée au diamètre interne du réacteur tubulaire cylindrique soit compris entre 0,2 et 0,9 et chacun des conduits d'alimentation qui débouchent dans le capuchon forme avec l'axe du réacteur tubulaire cylindrique un angle compris entre 15 ° et 90 °.

En règle générale, il s'avère préférable, pour de faibles rapports de la distance entre les sorties des conduits d'alimentation qui débouchent dans le capuchon rapportée au diamètre interne du réacteur tubulaire cylindrique (en particulier lorsque ce rapport est de l'ordre de 0,2 à 0,4) que l'angle que font ces conduits d'alimentation avec l'axe du réacteur tubulaire cylindrique soit le plus faible possible (typiquement de l'ordre de 15 à 30 °). A l'inverse, pour des rapports élevés, on aura intérêt à ce que l'angle soit plus élevé, par exemple entre 60 et 90 °. Entre ces extrêmes, il est des compétences de l'homme du métier d'adapter la géométrie de la chambre de mélange pour optimiser les conditions de mélange des flux dans cette chambre.

Par ailleurs, notamment de façon à inhiber des phénomènes de colmatage en sortie du réacteur, il est préférable que l'extrémité du réacteur tubulaire dans lequel a lieu la formation des particules soit muni en sortie d'un conduit d'évacuation de diamètre interne supérieur au diamètre interne du conduit d'alimentation véhiculant le flux caloporteur. D'autre part, il est généralement souhaitable que le conduit d'évacuation en sortie du réacteur tubulaire forme avec l'axe du réacteur tubulaire un angle compris entre 60 ° et 90 °.

D'autres paramètres du procédé et du réacteur peuvent encore être optimisés dans le cadre de la présente invention.

Dans ce cadre, en particulier, il est à noter qu'il s'avère souvent avantageux que le réacteur tubulaire soit muni, en aval de la chambre de mélange, de moyens propres à assurer un maintien de la température à une valeur constante ou sensiblement constante (typiquement à +/- 5 °C près) autour de la valeur de la température obtenue en sortie de chambre de mélange, ce qui permet encore d'optimiser les conditions de synthèse et d'assurer un contrôle de la taille, de la morphologie et de la composition des particules.

Par ailleurs, il est avantageux que les différentes parties du réacteur mises en oeuvre dans la synthèse des particules (en particulier le réacteur tubulaire) soient formées par un matériau résistant à des hautes pressions et températures, par exemple un alliage de type inconel qui est capable de supporter des conditions supercritiques.

La présente invention et ses avantages vont maintenant être encore davantage illustrés au vu de l'exemple de réalisation ci-après, donné en référence aux figures ci-annexées, où :
- la Figure 1 est une représentation schématique en coupe d'un réacteur typiquement utilisable dans le cadre de la présente invention
- la Figure 2 est une zone agrandie de la partie de la Figure 1 représentée par le cadre (II) en traits mixtes sur ladite Figure 1.

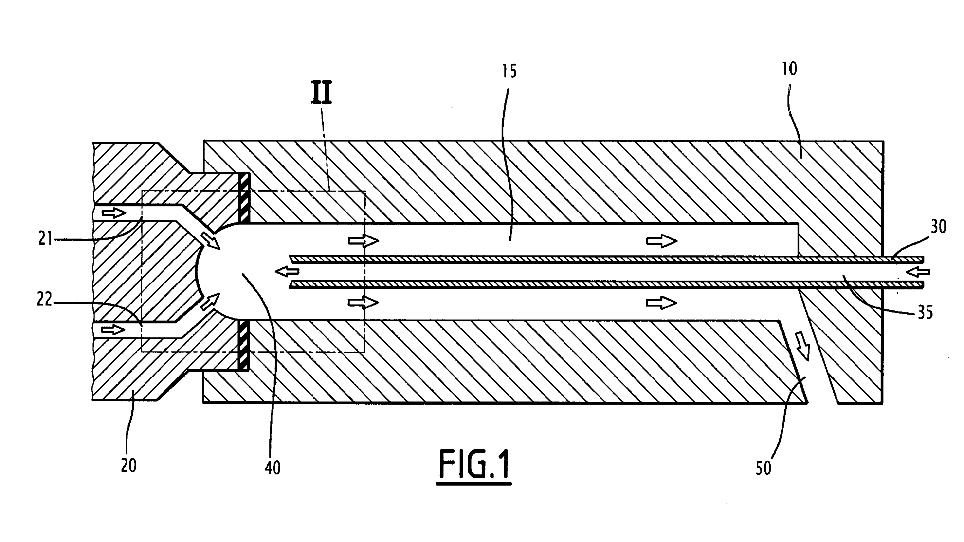

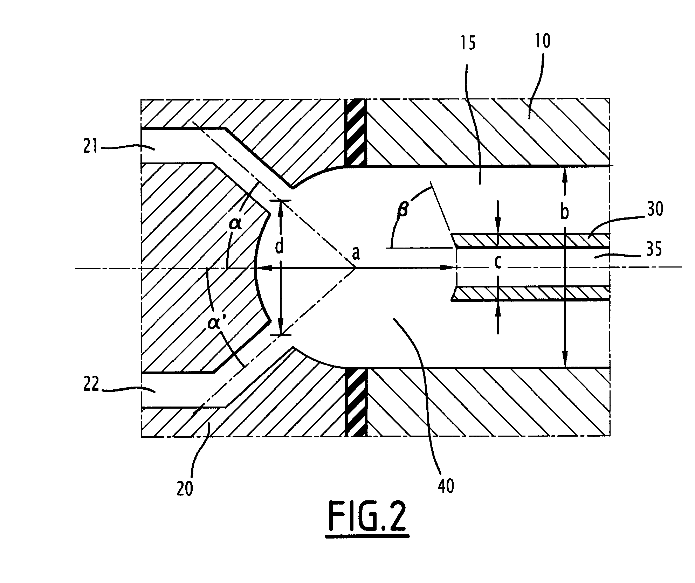

Sur les Figures 1 et 2, il est représenté un dispositif selon l'invention qui comporte un réacteur tubulaire 10 cylindrique, typiquement en inconel, dont l'espace interne, au sein duquel la réaction de conversion progressive des précurseurs en particules a lieu dans le procédé de l'invention, est représenté par la référence générale 15.

Ce réacteur tubulaire 10 est fermé à une de ses extrémités par un capuchon 20, avantageusement en inconel lui aussi, dans lequel débouchent des conduits d'alimentation 21 et 22, qui forment respectivement des angles α et α' avec l'axe du réacteur tubulaire 10, ces angles étant typiquement compris entre 15° et 90 °, typiquement de l'ordre de 20 ° à 40 ° selon le mode représenté, et qui sont séparés par une distance d qui est typiquement telle que le rapport d/b est compris entre 0,2 et 0,9 (par exemple entre 0,2 et 0,5 dans le cas du mode représenté sur la figure). Parmi ces conduits d'alimentation, au moins un permet de véhiculer le flux réactif. Le mode de réalisation représenté sur la figure correspond à deux conduits d'alimentation, mais, selon d'autres modes, un nombre différent de conduits peut déboucher dans le capuchon 20, par exemple un, trois ou quatre. La surface interne de ce capuchon à la forme d'un hémisphère de même diamètre que le diamètre interne b du réacteur tubulaire 10.

Par ailleurs, au sein de l'espace interne 15 du réacteur tubulaire, un conduit d'alimentation 30, permettant de véhiculer un flux caloporteur au sein de son espace interne 35, est disposé sensiblement le long de l'axe du réacteur tubulaire cylindrique, permettant une injection de flux caloporteur à contre-courant des flux véhiculés par les conduits d'alimentation 21 et 22.

Le conduit d'alimentation 30 débouche dans la zone extrémale du réacteur 10 munie du capuchon 20, avec une distance a entre l'extrémité du conduit d'alimentation 30 au fond du capuchon 20 généralement telle que le rapport a/b est compris entre 0,8 et 1,2.

Ce conduit d'alimentation 30 est un tube cylindrique dont la sortie a été usinée par une tête de fraisage conique et qui présente de ce fait, au niveau de sa sortie, un diamètre interne qui va en s'élargissant de l'intérieur vers l'extérieur du tube, avec un forme de cône (géométrie dite de "bec en cône") avec un angle β entre l'axe et la génératrice du cône avantageusement compris entre 30 ° et 60 °.

Compte tenu de la géométrie particulière du dispositif, une chambre de mélange 40 est formée par l'ensemble du capuchon 20 et de la zone extrémale du réacteur tubulaire 10 munie de ce capuchon. Lorsque des flux sont injecté par les conduits d'alimentation 21, 22 et 30, ces flux se mélangent de façon optimisée au sein de la chambre 40. Le mélange du flux caloporteur véhiculé par le conduit 30 avec le flux réactif véhiculé par l'un et/ou l'autre des conduits 21 et 22 mène à une mise en température et à une homogénéisation de la composition au sein de la chambre de mélange. Le mélange de flux résultant, parfaitement homogène en composition et en température se retrouve alors poussé dans le réacteur tubulaire où des particules minérales se forment par conversion progressive des précurseurs, et ce de façon homogène et contrôlée. On peut avantageusement disposer au long du réacteur tubulaire des sondes de températures associées à des moyens de chauffage (non représentés sur la figure), qui permettent de maintenir constantes les conditions de la réaction.

En sortie de réacteur, les particules formées sont récupérées à l'aide d'un conduit d'évacuation 50 de diamètre interne supérieur au diamètre interne du conduit 30, et qui forme avec l'axe du réacteur tubulaire un angle typiquement compris entre 60° et 90°. Ce décrochement du conduit d'évacuation permet, entre autres, d'optimiser l'évacuation des particules et d'éviter des phénomènes de colmatage par les particules en sortie du réacteur tubulaire.

Un réacteur du type représenté sur les Figures 1 et 2 a été employé efficacement par les inventeurs pour la synthèse de particules d'oxydes de zirconium, de zinc et de fer et de titane, respectivement à partir de précurseurs ZrO(NO₃)₂, Zn(NO₃)₂, Fe₂SO₄ et (CH₃CH(O)COONH₄)₂Ti(OH)₂.

## Revendications

1. Procédé de préparation en continu de particules minérales par thermolyse de précurseurs minéraux en milieu aqueux, dans lequel on met en contact :
- un premier flux, dit flux réactif, comprenant les précurseurs minéraux à une température inférieure à leur température de conversion
- à contre courant de ce premier flux, un deuxième flux, dit flux caloporteur, comprenant de l'eau à une température suffisante pour porter les précurseurs à une température supérieure à leur température de conversion,
le flux de mélange résultant du mélange de ces deux flux étant ensuite véhiculé au sein d'un réacteur tubulaire (10), où les particules se forment par conversion progressive des précurseurs,
et où la mise en contact du flux réactif et du flux caloporteur est réalisée au sein d'une chambre de mélange (40),
le flux réactif étant injecté par au moins un premier conduit d'alimentation (21) dans ladite chambre (40) et le flux caloporteur étant injecté dans ladite chambre, à contre-courant du premier flux, par un deuxième conduit d'alimentation (30), et ladite chambre de mélange (40) ayant une section maximale supérieure à la section de sortie de chacun desdits conduits d'alimentation de ladite chambre (21, 22, 40).

2. Procédé selon la revendication 1, où la chambre de mélange (40) est alimentée par au moins deux conduits d'alimentation (21, 22) autres que le conduit d'alimentation (30) par lequel le flux caloporteur est injecté à contre-courant, dont un au moins (21) véhicule le flux réactif.

3. Procédé selon la revendication 2, où les précurseurs minéraux employés sont obtenus par réaction de plusieurs réactifs réagissant entre eux, et dans lequel la chambre (40) est alimentée par au moins deux conduit d'alimentation (21, 22) véhiculant chacun un des réactifs à l'exception des autres réactifs.

4. Procédé selon la revendication 2 ou 3, où, en plus des conduits d'alimentation (21, 30) véhiculant le flux réactif et le flux caloporteur, la chambre de mélange comporte au moins un conduit d'alimentation (22) additionnel par lequel est injecté de l'eau.

5. Procédé selon l'une des revendications 1 à 4, où la totalité de la surface interne de la chambre de mélange (40) est concave, de préférence sans partie anguleuse.

6. Procédé selon la revendication 5, où la surface interne de la chambre de mélange (40) a la forme d'une portion de sphère, par exemple un hémisphère.

7. Procédé selon l'une des revendications 1 à 6, où le conduit d'alimentation (30) véhiculant le flux caloporteur à contre-courant est un tube cylindrique qui présente, au niveau de sa sortie, un diamètre interne qui va en s'élargissant de l'intérieur vers l'extérieur du tube.

8. Procédé selon l'une des revendications 1 à 7, dans lequel l'espace interne (15) du réacteur tubulaire (10) employé pour la préparation des particules a la forme d'un cylindre dont une des extrémité est obturée par un capuchon (20), et où :
- le conduit (ou les conduits) d'alimentation véhiculant le flux réactif (21, 22) débouche(nt) dans le capuchon (20) ; et
- le conduit d'alimentation (30) véhiculant le flux caloporteur est localisé dans l'espace interne (15) du réacteur tubulaire cylindrique (10) et débouche au niveau de la zone extrémale du réacteur (10) dotée du capuchon (20)
ce par quoi ladite zone extrémale du réacteur (10) dotée du capuchon constitue une chambre de mélange (40) des flux réactif et caloporteur.

9. Procédé selon l'une des revendications 8, où la surface interne de l'ensemble du réacteur cylindrique (10) doté de son capuchon (20) est entièrement concave, de préférence sans partie anguleuse.

10. Procédé selon la revendications 9, où le capuchon (20) a la forme d'un hémisphère, et où le conduit d'alimentation (30) véhiculant le flux caloporteur qui est localisé au sein du cylindre débouche dans le réacteur cylindrique (10) et non dans le capuchon (20), de préférence sensiblement au niveau de l'axe commun du réacteur tubulaire cylindrique et du capuchon hémisphérique.

11. Procédé selon l'une des revendications 8 à 10, où le rapport (c/b) du diamètre externe (c) du conduit d'alimentation véhiculant le flux caloporteur rapporté au diamètre interne (b) du réacteur tubulaire cylindrique est supérieur à 0,5, ce rapport étant typiquement compris entre 0,5 et 0,8.

12. Procédé selon la revendication selon l'une des revendication 1 à 12, où l'extrémité du réacteur tubulaire dans lequel a lieu la formation des particules est munie en sortie d'un conduit d'évacuation (50) de diamètre interne supérieur au diamètre interne du conduit d'alimentation (30) véhiculant le flux caloporteur, ce conduits d'évacuation en sortie du réacteur tubulaire formant de préférence avec l'axe du réacteur tubulaire un angle compris entre 60° et 90 °.

13. Dispositif pour la mise en oeuvre du procédé de selon l'une quelconque des revendications précédentes qui comprend :
un réacteur tubulaire (10) propre à réaliser la synthèse de particules par thermolyse de précurseurs minéraux en milieu aqueux ; et
en contact fluide avec ledit réacteur tubulaire (10), une chambre de mélange (40) dans laquelle débouchent :
- au moins un premier conduit d'alimentation (21, 22) de la chambre capable de véhiculer un flux comprenant des précurseurs minéraux ;
- un deuxième conduit d'alimentation (30) de la chambre permettant de véhiculer un flux à contre-courant du flux véhiculé par le premier conduit, et propre à véhiculer un fluide caloporteur,
où la chambre de mélange (40) a une section maximale supérieure à la section de sortie de chacun desdits conduits d'alimentation.

14. Dispositif selon la revendication 13, où la chambre de mélange (40) est telle que définie dans l'une des revendications 2 à 11.

## Patentansprüche

1. Verfahren für die kontinuierliche Synthese mineralischer Partikel durch Thermolyse mineralischer Vorläufer in wässrigem Medium, wobei in Kontakt gebracht werden:
- ein erster Strom, als Reaktionsstrom bezeichnet, der die mineralischen Vorläufer in einer Temperatur unter ihrer Konversionstemperatur umfasst,
- im Gegenstrom zu diesem ersten Strom einen zweiten Strom, als Wärmeträgerstrom bezeichnet, der Wasser in einer Temperatur umfasst, die ausreichend ist, um die Vorläufer auf eine Temperatur über ihrer Konversionstemperatur zu bringen,
wobei der Gemischstrom, der aus der Mischung dieser zwei Ströme resultiert, danach in einen rohrförmigen Reaktor (10) befördert wird, wo sich die Partikel durch schrittweise Konversion der Vorläufer bilden,
und wobei das Inkontaktbringen des Reaktionsstroms und des Wärmeträgerstroms in einer Mischkammer (40) erfolgt,
wobei der Reaktionsstrom durch mindestens eine erste Versorgungsleitung (21) in die Kammer (40) eingespritzt wird und der Wärmeträgerstrom in die Kammer, im Gegenstrom zum ersten Strom, durch eine zweite Versorgungsleitung (30) eingespritzt wird, und die Mischkammer (40) einen maximalen Querschnitt hat, der größer ist als der Ausgangsquerschnitt jeder der Versorgungsleitungen der Kammer (21, 22, 40).

2. Verfahren nach Anspruch 1, wobei die Mischkammer (40) von mindestens zwei Versorgungsleitungen (21, 22) versorgt wird, die andere sind als die Versorgungsleitung (30), durch die der Wärmeträgerstrom im Gegenstrom eingespritzt wird, von denen mindestens eine (21) den Reaktionsstrom befördert.

3. Verfahren nach Anspruch 2, wobei die verwendeten mineralischen Vorläufer durch Reaktion mehrerer Reagenzien, die miteinander reagieren, hergestellt werden, und wobei die Kammer (40) von mindestens zwei Versorgungsleitungen (21, 22) versorgt wird, die jeweils eines der Reagenzien mit Ausnahme der anderen Reagenzien befördern.

4. Verfahren nach Anspruch 2 oder 3, wobei, neben den Versorgungsleitungen (21, 30), die den Reaktionsstrom und den Wärmeträgerstrom befördern, die Mischkammer mindestens eine zusätzliche Versorgungsleitung (22) aufweist, durch die Wasser eingespritzt wird.

5. Verfahren nach einem der Ansprüche 1 bis 4, wobei die Gesamtheit der Innenfläche der Mischkammer (40) konkav ist, vorzugsweise ohne winkligen Teil.

6. Verfahren nach Anspruch 5, wobei die Innenfläche der Mischkammer (40) die Form eines Kugelabschnitts hat, beispielsweise einer Halbkugel.

7. Verfahren nach einem der Ansprüche 1 bis 6, wobei die Versorgungsleitung (30), die den Wärmeträgerstrom im Gegenstrom befördert, ein zylindrisches Rohr ist, das auf Ebene seines Ausgangs einen Innendurchmesser aufweist, der sich von innen nach außen des Rohrs erweitert.

8. Verfahren nach einem der Ansprüche 1 bis 7, wobei der Innenraum (15) des rohrförmigen Reaktors (10), der für die Synthese der Partikel verwendet wird, die Form eines Zylinders hat, von dem eines der Enden durch eine Kappe (20) verschlossen ist, und wobei:
- die Versorgungsleitung (oder die -leitungen), die den Reaktionsstrom (21, 22) befördern, in die Kappe (20) mündet/münden, und
- die Versorgungsleitung (30), die den Wärmeträgerstrom befördert, im Innenraum (15) des zylindrischen rohrförmigen Reaktors (10) lokalisiert ist und auf Ebene der Endzone des Reaktors (10), die mit der Kappe (20) ausgestattet ist, ausmündet,
wobei die Endzone des Reaktors (10), die mit der Kappe ausgestattet ist, eine Mischkammer (40) des Reaktions- und Wärmeträgerstroms bildet.

9. Verfahren nach einem der Ansprüche 8, wobei die Innenfläche des gesamten zylindrischen Reaktors (10) mit seiner Kappe (20) vollkommen konkav ist, vorzugsweise ohne winkligen Teil.

10. Verfahren nach Anspruch 9, wobei die Kappe (20) die Form einer Halbkugel hat und wobei die Versorgungsleitung (30), die den Wärmeträgerstrom befördert, die innerhalb des Zylinders lokalisiert ist, in den zylindrischen Reaktor (10) und nicht in die Kappe (20) ausmündet, vorzugsweise etwa auf Ebene der gemeinsamen Achse des zylindrischen rohrförmigen Reaktors und der halbkugelförmigen Kappe.

11. Verfahren nach einem der Ansprüche 8 bis 10, wobei das Verhältnis (c/b) des Außendurchmessers (c) der Versorgungsleitung, die den Wärmeträgerstrom befördert, die an den Innendurchmesser (b) des zylindrischen rohrförmigen Reaktor angesetzt ist, größer ist als 0,5, wobei dieses Verhältnis in typischer Weise zwischen 0,5 und 0,8 inklusive ist.

12. Verfahren nach einem der Ansprüche 1 bis 12, wobei das Ende des rohrförmigen Reaktors, wo die Bildung der Partikel stattfindet, am Ausgang mit einer Ableitungsleitung (50) mit einem Innendurchmesser ausgestattet ist, der größer ist als der Innendurchmesser der Versorgungsleitung (30), die den Wärmeträgerstrom befördert, wobei diese Ableitungsleitungen am Ausgang des rohrförmigen Reaktors mit der Achse des rohrförmigen Reaktors vorzugsweise einen Winkel zwischen 60° und 90° bilden.

13. Vorrichtung zur Umsetzung des Verfahrens nach einem der vorangehenden Ansprüche, die umfasst:
einen rohrförmigen Reaktor (10), der imstande ist, die Partikelsynthese durch Thermolyse mineralischer Vorläufer im wässrigen Medium durchzuführen, und
im Fluidkontakt mit dem rohrförmigen Reaktor (10), eine Mischkammer (40), in die ausmünden:
- mindestens eine erste Versorgungsleitung (21, 22) der Kammer, die imstande ist, einen Strom zu befördern, der mineralische Vorläufer umfasst,
- eine zweite Versorgungsleitung (30) der Kammer, die erlaubt, einen Strom im Gegenstrom zu dem Strom zu befördern, der von der ersten Leitung befördert wird, und imstande ist, ein Wärmeträgerfluid zu befördern,
wobei die Mischkammer (40) einen maximalen Querschnitt hat, der größer ist als der Ausgangsquerschnitt jeder der Versorgungsleitungen.

14. Vorrichtung nach Anspruch 13, wobei die Mischkammer (40) derart ist, wie in einem der Ansprüche 2 bis 11 definiert.

## Claims

1. A method for continuously preparing mineral particles by thermolysis of mineral precursors in an aqueous medium, comprising contacting:
- a first flow, called the reactive flow, comprising mineral precursors at a lower temperature than the conversion temperature thereof,
- a second flow, called the coolant flow, that is countercurrent to said first flow, comprising water at a temperature that is sufficient to bring the precursors to a temperature higher than the conversion temperature thereof,
the mixture flow resulting from mixing these two flows being then conveyed within a tubular reactor (10), wherein particles are formed by gradually converting the precursors, and wherein contacting of the reactive flow and of the coolant flow is carried out inside a mixing chamber (40),
the reactive flow being injected into said chamber (40) by at least one first supply pipe (21) and the coolant flow being injected into said chamber, countercurrent to the first flow, by a second supply pipe (30), and said mixing chamber (40) having a maximum cross-section larger than the outlet cross-section of each of said supply pipes of said chamber (21, 22, 40).

2. The method according to claim 1, wherein the mixing chamber (40) is fed by at least two supply pipes (21, 22) other than the supply pipe (30) through which the coolant flow is injected countercurrently, at least one (21) of which conveys the reactive flow.

3. The method according to claim 2, wherein the mineral precursors used are obtained through the reaction of several reagents with one another, and wherein the chamber (40) is fed by at least two supply pipes (21, 22) each conveying one of the reagents, excluding the other reagents.

4. The method according to claim 2 or 3, wherein, in addition to the supply pipes (21, 30) conveying the reactive flow and the coolant flow, the mixing chamber comprises at least one additional supply pipe (22) through which water is injected.

5. The method according to one of claims 1 to 4, wherein the entire inner surface of the mixing chamber (40) is concave, preferably without angular parts.

6. The method according to claim 5, wherein the inner surface of the mixing chamber (40) is in the shape of a sphere portion, for example a hemisphere.

7. The method according to one of claims 1 to 6, wherein the supply pipe (30) conveying the countercurrent coolant flow is a cylindrical tube having, at its outlet, an inner diameter that widens from the inside toward the outside of the tube.

8. The method according to one of claims 1 to 7, wherein the inner space (15) of the tubular reactor (10) used to prepare the particles is in the shape of a cylinder whereof one end is covered by a cap (20), and wherein :
- the supply pipe(s) conveying the reactive flow (21, 22) emerge(s) in the cap (20); and
- the supply pipe (30) conveying the coolant flow is located in the inner space (15) of the cylindrical tubular reactor (10) and emerges at the end area of the reactor (10) provided with the cap (20),
through which said end area of the reactor (10) provided with the cap constitutes a mixing chamber (40) of the reactive and coolant flows.

9. The method according to one of claims 8, wherein the inner surface of the assembly of the cylindrical reactor (10) provided with its cap (20) is completely concave, preferably without angular parts.

10. The method according to claim 9, wherein the cap (20) has a hemispherical shape, and wherein the supply pipe (30) conveying the coolant flow that is located within the cylinder emerges in the cylindrical reactor (10) and not in the cap (20), preferably substantially at the shared axis of the cylindrical tubular reactor and of the hemispherical cap.

11. The method according to one of claims 8 to 10, wherein the ratio (c/b) of the outer diameter (c) of the supply pipe conveying the coolant fluid relative to the inner diameter (b) of the cylindrical tubular reactor is greater than 0.5, this ratio being typically comprised between 0.5 and 0.8.

12. The method according to one of claims 1 to 12, wherein the end of the tubular reactor in which the formation of the particles takes place, is provided at the outlet, with an evacuation pipe (50) having an inner diameter larger than the inner diameter of the supply pipe (30) conveying the coolant flow, this evacuation pipe at the outlet of the tubular reactor preferably forming an angle comprised between 60° and 90° with the axis of the tubular reactor.

13. A device for implementing the method according to any one the preceding claims, comprising:
a tubular reactor (10) capable of performing the particle synthesis by thermolysis of mineral precursors in an aqueous medium; and
in fluid contact with said tubular reactor (10), a mixing chamber (40) in which emerge:
- at least one first supply pipe (21, 22) of the chamber capable of conveying a flow comprising the mineral precursors ;
- a second supply pipe (30) of the chamber making it possible to convey a flow countercurrent to the flow conveyed by the first pipe, and capable of conveying a coolant fluid,
wherein the mixing chamber (40) has a maximum cross-section that is larger than the outlet cross-section of each of said supply pipes.

14. The device according to claim 13, wherein the mixing chamber (40) is as defined in one of claims 2 to 11.
